# EUROPÄISCHE PATENTSCHRIFT

(11) **EP 0 589 162 B1**
(45) Veröffentlichungstag und Bekanntmachung des Hinweises auf die Patenterteilung: **22.01.1997**
(21) Anmeldenummer: 93111093.6
(22) Anmeldetag: 10.07.1993
(51) Int. Cl.: B65G 27/28, B65G 27/08

(54) **Resonanz-Schwingförderrinne**
Resonance vibratory conveyor
Convoyeur oscillant de résonance

(30) Priorität: 24.09.1992 DE 4232010
(43) Veröffentlichungstag der Anmeldung: 30.03.1994
(73) Patentinhaber: Jöst GmbH + Co. KG, D-48249 Dülmen (DE)
(72) Erfinder: Kreft, Manfred, Dipl.-Ing., D-58300 Wetter (DE)
(74) Vertreter: Patentanwälte Meinke, Dabringhaus und Partner

(56) Entgegenhaltungen:
- AT-B- 265 120
- DE-B- 2 051 626
- US-A- 4 961 491

## Beschreibung

Die Erfindung richtet sich auf eine Resonanz-Förderrinne (Schwingmasse I) mit einem Schwingantrieb und einer Federlagerung, wobei diese Federn an einem Zwischenrahmen (Schwingmasse II) angreifen, der seinerseits über Federn an einem Fundament befestigt ist.

Derartige Schwingförderrinnen werden benutzt, um Fördergut durch eine ungleichförmige, hin- und hergehende Bewegung im Prinzip in waagerechter oder schwach geneigter Anordnung zu fördern, wobei beim Hingang Massenkräfte auf das Fördergut übertragen werden, die das Fördergut während des Rinnenrückhubes in Förderrichtung vorwärts bewegen, wobei je nach Amplitude zwischen einfachen Schüttelrutschen und sogenannten Schwingrinnen unterschieden wird, die schnelle Schwingungen mit kleinen Amplituden aufweisen und eine Art Mikrowurfbewegung ausüben.

Dabei ist es bekannt, die Rinne bzw. den Fördertrog mit Speicherfedern zu versehen, wobei die Schwingerregung über einen Exzenterantrieb in Resonanznähe der Eigenfrequenz des Feder-Massesystems erfolgt.

Es ist auch bekannt, die Schwingförderrinnen mittels eines Rahmens fest mit einem Fundament zu verbinden, wobei die Speicherfedern zwischen Fördertrog und Befestigungsrahmen montiert sind, was bedeutet, daß die eingeleiteten Kräfte unmittelbar vom Fundament aufgebracht werden müssen mit dem Nachteil, daß hier das Fundament insbesondere auch bei längeren Förderern biegesteif ausgeführt sein muß.

Eine solche Konstruktion ist in der Regel dann nicht geeignet, wenn derartige Fundamente nicht zur Verfügung stehen, etwa bei dem Verlegen von Förderrinnen überdach eines Gebäudes od. dgl. mehr.

Darüber hinaus ist es auch bekannt, ein Schwingensystem-Fördertrog und -Rahmen vorzusehen, wobei der Rahmen nicht unmittelbar im Fundament, sondern über Abstützfedern am Fundament befestigt ist, wobei der Rahmen als Gegenschwingmasse ausgebildet ist. Diese Gegenschwingmasse schwingt in der Gebrauchslage in der Gegenphase zum Fördertrog mit einer Amplitude, die umgekehrt zum Verhältnis der Masse des Fördertroges ist und von der Amplitude des Fördertroges abhängig ist. Nachteilig ist dabei, daß durch die Schwingungen der Gegenschwingmasse immer noch erhebliche Kräfte in die Fundamente eingeleitet werden. Auch müssen hier die Schwingförderrinnen vergleichsweise schwer ausgebildet werden. Durch die Notwendigkeit der Biegesteifigkeit der Schwingmasse sind auch hier Beschränkungen an die Baulänge gegeben.

Aus der US-A-4 961 491 ist eine Schwingschütte bekannt, die als Dreimassen-Schwingsystem ausgebildet ist, wobei dort auf einem Doppelstandbein die Mittelmasse federnd mit dem Fundament verbunden ist, wobei an dieser Mittelmasse federnd die Schütte als Schwingmasse I und eine Gegenmasse als Masse III federnd angeordnet sind.

Aufgabe der Erfindung ist die Schaffung einer Lösung, mit der zum einen die in ein Fundament einzuleitenden Kräfte auf ein sehr geringes Maß reduzierbar sind und mit der zum anderen erreichbar ist, daß die Förderrinne vergleichsweise leicht ausbildbar ist.

Bei einer Schwingförderrinne der eingangs bezeichneten Art wird diese Aufgabe gemäß der Erfindung durch die Merkmale des Hauptanspruches gelöst.

Mit der Erfindung wird erreicht, daß am gleichen Punkt angreifende Schwingsystem Fördertrog/Speicherfeder einerseits und weitere Speicherfeder/Gegenschwingmasse andererseits in der Gebrauchslage der Zwischenrahmen relativ zum Fundament praktisch in Ruhe verbleibt, so daß die im Zwischenrahmen lagernden Federn keine oder nur sehr geringe Kräfte in das Fundament einleiten müssen. Dabei ist es notwendig, daß die Wirklinien der Speicherfedern zwischen Fördertrog und Zwischenrahmen einerseits und Gegenschwingmasse und Zwischenrahmen andererseits miteinander fluchten, wie dies die Erfindung ebenfalls vorsieht.

In weiterer Ausgestaltung ist nach der Erfindung vorgesehen, daß der Schwingantrieb am Zwischenrahmen einerseits und wirkmäßig am Fördertrog andererseits angeordnet ist, d.h. der Schwingantrieb beaufschlagt unmittelbar den Fördertrog, die Gegenschwingmasse ist nicht unmittelbar im Gegentakt vom Antrieb beaufschlagt, hier ergibt sich die wirkmäßige Auslösung über die Speicherfedern. Diese Gestaltung macht den Einsatz eines Antriebsmotors mit geringer Leistung möglich.

Zweckmäßig ist die Anordnung so getroffen, daß die Eigenfrequenz der beiden Schwingsysteme Zwischenrahmen/Fördertrog einerseits und Zwischenrahmen/Gegenmasse andererseits unabhängig voneinander einstellbar ist. Hier kann es vorteilhaft sein, die Eigenfrequenz der Gegenmasse geringfügig über die Frequenz des Schwingantriebes einzustellen, wie dies nach der Erfindung ebenfalls vorgesehen ist.

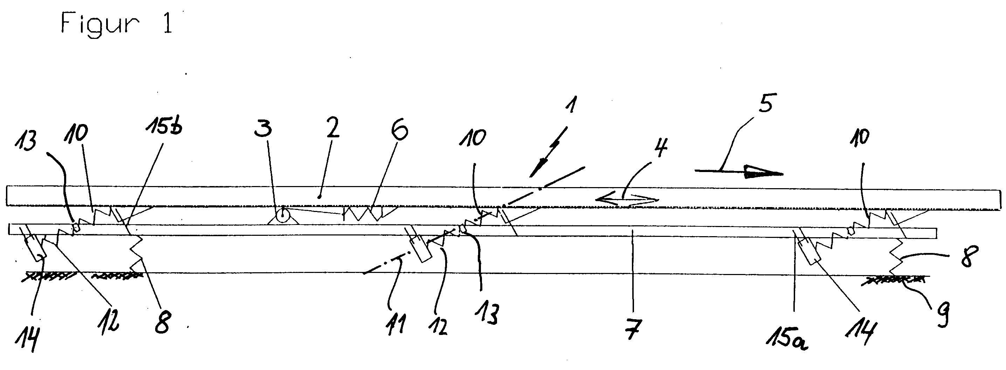

Die Erfindung ist nachstehend anhand der Zeichnung beispielsweise näher erläutert. Diese zeigt in
- Fig. 1: eine schematische Seitenansicht einer Resonanz-Schwingförderrinne nach der Erfindung.

Die allgemein mit 1 bezeichnete Schwingförderrinne weist einen Fördertrog 2 auf, der über einen Exzenterantrieb 3 den Fördertrog gemäß Doppelpfeil 4 antreibt, derart, daß das auf dem Fördertrog befindliche Gut in Richtung des Pfeiles 5 gefördert wird.

Der Exzenterantrieb 3 greift am Fördertrog 2 über eine Feder 6 an und ist seinerseits unmittelbar an einem Zwischenrahmen 7 befestigt. Der Zwischenrahmen 7 ist seinerseits mittels Stützfedern 8 an einem andeutungsweise wiedergegebenen Fundament 9 befestigt.

Wie sich aus der Figur ergibt, sind zwischen Fördertrog 2 einerseits und dem Zwischenrahmen 7 andererseits Speicherfedern 10 vorgesehen sowie in gleicher Wirklinienrichtung gemäß strichpunktierter Linie 11 weitere Speicherfedern 12. Diese Speicherfedern 12 greifen am gleichen Anlenkpunkt 13 am Zwischenrahmen 7 an wie die Speicherfedern 10. Sie tragen auf ihrer dem Zwischenrahmen 7 abgewandten Seite eine Gegengewichtsmasse 14.

Sowohl die Gegengewichtsmassen 14 mit den Speicherfedern 12 als auch die Speicherfedern 10 sind über Blattfedern 15a bzw. 15b seitlich geführt, derart, daß das System keine Kippmomente zur Seite hin ausführen kann.

Nicht näher dargestellt ist, daß die Federn 10 und 12 und/oder die Blattfedern 15 einzeln oder gemeinsam einstellbar sind, um die Sequenzen der Schwingsysteme einstellen zu können.

Durch die Wirkung der Speicherfedern 10 und 12 in der gleichen Wirklinie 11 kann bei entsprechender Einstellung erreicht werden, daß die Systeme eine Art pulsierende Bewegung derart durchführen, daß sich der Zwischenrahmen 7 praktisch in Ruhe befindet, derart, daß über die Lagerfedern 8 keine oder nur sehr geringe Kräfte in das Fundament 9 eingeleitet werden.

## Patentansprüche

1. Resonanz-Schwingförderrinne (1) (Schwingmasse I) mit einem Schwingantrieb (3) und einer Federlagerung, wobei diese Federn an einem Zwischenrahmen (7) (Schwingmasse II) angreifen, der seinerseits über Federn an einem Fundament befestigt ist, wobei dem Anlenkpunkt jeder als Speicherfeder (10) wirkenden Feder zwischen Fördertrog (2) und Zwischenrahmen (7) je eine weitere Speicherfeder (12) mit einer Gegenschwingmasse (14) am Zwischenrahmen angreifend als Masse III eines für sich gesehen bekannten Dreimassen-Resonanzschwingsystemes zugeordnet ist, und wobei die Wirklinien (11) der Speicherfeder (10 bzw. 12) zwischen Fördertrog (2) und zwischen Zwischenrahmen (7) einerseits und Gegenschwingmasse (14) und Zwischenrahmen (7) andererseits miteinander fluchten.

2. Resonanz-Schwingförderrinne nach Anspruch 1,
wobei der Schwingantrieb (3) ain Zwischenrahmen (7) einerseits und wirkmäßig an dem Fördertrog (2) andererseits angeordnet ist.

3. Resonanz-Schwingförderrinne nach Anspruch 1 oder 2,
wobei die Eigenfrequenz der beiden Schwingungssysteme Zwischenrahmen/Fördertrog (7/2) einerseits und Zwischenrahmen/Gegenmasse (7/14) andererseits unabhängig voneinander einstellbar ist.

4. Resonanz-Schwingförderrinne nach Anspruch 3,
wobei die Eigenfrequenz der Gegenmassen (14) geringfügig über der Frequenz des Schwingantriebes (3) einstellbar ist.

5. Resonanz-Schwingförderrinne nach einem der vorangehenden Ansprüche, wobei das Schwingverhalten des Fördertroges (2) einerseits und der Gegenschwingmassen (14) andererseits so einstellbar ist, daß der Zwischenrahmen (7) in der Gebrauchslage im wesentlichen in Ruhestellung verbleibt.

## Claims

1. A resonance vibratory conveyor channel (1) (vibratory mass I) having a vibratory drive (3) and a spring mounting, wherein said springs act on an intermediate frame (7) (vibratory mass II) which in turn is fixed to a foundation means by way of springs, wherein associated with the mounting point of each spring acting as a storage spring (10) between the conveyor trough (2) and the intermediate frame (7) is a respective further storage spring (12) with a counter-vibratory mass (14) acting on the intermediate frame as mass III of a per se known three-mass resonance vibratory system, and wherein the lines of action (11) of the storage springs (10 and 12 respectively) between the conveyor trough (2) and between the intermediate frame (7) on the one hand and the counter-vibratory mass (14) and the intermediate frame (17) on the other hand are aligned with each other.

2. A resonance vibratory conveyor channel according to claim 1 wherein the vibratory drive (7) is arranged on the intermediate frame (7) on the one hand and operatively on the conveyor trough (2) on the other hand.

3. A resonance vibratory conveyor channel according to claim 1 or claim 2 wherein the natural frequency of the two vibratory systems of the intermediate frame/conveyor trough (7/2) on the one hand and the intermediate frame/counter-mass (7/14) on the other hand is adjustable independently of each other.

4. A resonance vibratory conveyor channel according to claim 3 characterised in that the natural frequency of the counter-masses (14) can be set slightly above the frequency of the vibratory drive (3).

5. A resonance vibratory conveyor channel according to one of the preceding claims wherein the vibratory characteristics of the conveyor trough (2) on the one hand and the counter-vibratory masses (14) on the other hand can be so adjusted that the intermediate frame (7) remains substantially in the rest position in the condition of use.

## Revendications

1. Gouttière transporteuse oscillante à résonance (1) (masse oscillante I) comportant un dispositif d'entraînement en oscillations (3) et une suspension à ressorts, ces ressorts attaquant un cadre intermédiaire (7) (masse oscillante II), qui pour sa part est fixé à une fondation par l'intermédiaire de ressorts, et dans laquelle au point d'articulation de chaque ressort agissant en tant que ressort accumulateur (10) est associé, entre une auge de convoyage (2) et le cadre intermédiaire (7), respectivement un autre ressort accumulateur (12) comportant une masse oscillante antagoniste (14) qui attaque le cadre intermédiaire, en tant que masse IIII d'un système oscillant à résonance à trois masses connu en soi, et dans laquelle les lignes d'action (11) des ressorts accumulateurs (10 et 12) entre l'auge de convoyage (2) et le cadre intermédiaire (7) d'une part et entre la masse oscillante antagoniste (14) et le cadre intermédiaire (7) d'autre part sont alignées entre elles.

2. Gouttière transporteuse oscillante à résonance selon la revendication 1, dans laquelle le dispositif d'entraînement en oscillations (3) est disposé d'une part sur le cadre intermédiaire (7) et d'autre' part, d'une manière active, sur l'auge de convoyage (2).

3. Gouttière transporteuse oscillante à résonance selon la revendication 1 ou 2, dans laquelle les fréquences propres des deux systèmes oscillants, à savoir cadre intermédiaire/auge de convoyage (7/2) d'une part et cadre intermédiaire/masse antagoniste (7/4) d'autre part sont réglables indépendamment l'une de l'autre.

4. Gouttière transporteuse oscillante à résonance selon la revendication 3, dans laquelle la fréquence de résonance des masses antagonistes (14) est réglable à une valeur légèrement supérieure à la fréquence du dispositif d'entraînement en oscillations (3).

5. Gouttière transporteuse oscillante à résonance selon l'une des revendications précédentes, dans laquelle le comportement d'oscillations de l'auge de convoyage (2) d'une part et des masses oscillantes antagonistes (14) d'autre part est réglable de telle sorte que, dans la position d'utilisation, le cadre intermédiaire (7) reste essentiellement dans la position de repos.
